# EUROPEAN PATENT APPLICATION

(11) **EP 4 381 935 A1**
(43) Date of publication of application: **12.06.2024**
(21) Application number: 23789218.7
(22) Date of filing: 20.06.2023
(51) Int. Cl.: A01D 69/06, A01D 45/00

(54) **DUAL-DRUM TWO-GEAR TRANSMISSION AND DOUBLE-LONGITUDINAL AXIAL FLOW HARVESTER**

(30) Priority: 28.10.2022 CN 202211332311
(71) Applicant: Weichai Lovol Intelligent Agricultural Technology Co., Ltd., Weifang, Shandong 261206 (CN)
(72) Inventor: The designation of the inventor has not yet been filed
(74) Representative: Dehns
(86) International application number: PCT/CN2023/101517
(87) International publication number: WO 2024/087669

(57) **Abstract**

Some embodiments of the invention provide a double-roller dual-gear transmission box and a double-longitudinal axial flow harvester. According to the double-roller dual-gear transmission box, an input shaft is mounted in an input dual-gear box assembly, a first-gear driving gear and a second-gear driving gear are mounted on the input shaft, and a shift fork shaft is mounted in the input dual-gear box assembly; a shift fork is mounted on the shift fork shaft, and the shift fork is connected with an engagement sleeve; a first end of a second shaft is rotatably mounted in the input dual-gear box assembly, and a second end of the second shaft is rotatably mounted in an output box assembly; the engagement sleeve, a first-gear driven gear, and a second-gear driven gear are mounted on the second shaft; the first-gear driven gear engages with the first-gear driving gear, and the second-gear driven gear engages with the second-gear driving gear; a second output driven gear is mounted on one output shaft, and a first output driven gear is mounted on the other output shaft; and a normally engaged driving gear is mounted on the second shaft, an idle gear is mounted on an idle gear shaft, the normally engaged driving gear engages with the second output driven gear and the idle gear separately, and the idle gear engages with the first output driven gear.

## Description

### Cross-Reference to Related Application

The invention claims the priority to Patent Application No.202211332311.9, filed with the Chinese Patent Office on October 28, 2022 and entitled "Double-roller Dual-gear Transmission box and Double-longitudinal Axial Flow Harvester".

### Technical Field

The present invention relates to a technical field of transmission boxes, and in particular to a double-roller dual-gear transmission box and a double-longitudinal axial flow harvester.

### Background

The roller transmission box, a core of the transmission system of the harvester, has the function of harvesting crops. When the harvester runs in the field, the roller transmission box can drive the roller box to run, so as to harvest the crops.

According to the form of roller, the harvesters can be divided into double-longitudinal axial flow harvesters and single-longitudinal axial flow roller harvesters. Different crops will be harvested upon replacement of headers.

The roller transmission box currently used in the double-longitudinal axial flow harvester in the market is of a split type structure and occupies a large assembly space.

### Summary

In order to overcome the defects known to the inventors, the present invention provides a double-roller dual-gear transmission box and a double-longitudinal axial flow harvester.

A technical solution for solving the technical problem described above of some embodiments of the present invention is as follows: a double-roller dual-gear transmission box includes an input shaft, a first-gear driving gear, a second-gear driving gear, a second output driven gear, a normally-engaged driving gear, an idle gear, an idle gear shaft, a first output driven gear, a pair of output shafts, a shift fork, a shift fork shaft, a first-gear driven gear, an engagement sleeve, a second-gear driven gear, a second shaft, an input dual-gear box assembly, and an output box assembly, wherein the input shaft is rotatably mounted in the input dual-gear box assembly, the first-gear driving gear and the second-gear driving gear are mounted on the input shaft, and the shift fork shaft is slidably mounted in the input dual-gear box assembly; the shift fork is mounted on the shift fork shaft, and the shift fork is connected with the engagement sleeve; a first end of the second shaft is rotatably mounted in the input dual-gear box assembly, and a second end of the second shaft is rotatably mounted in the output box assembly; the engagement sleeve, the first-gear driven gear, and the second-gear driven gear are mounted on one side of the second shaft; the engagement sleeve is positioned between the first-gear driven gear and the second-gear driven gear; the first-gear driven gear is engaged with the first-gear driving gear, and the second-gear driven gear is engaged with the second-gear driving gear; the pair of output shafts and the idle gear shaft are rotatably mounted in the output box assembly; the second output driven gear is mounted on one of the pair of the output shafts, and the first output driven gear is mounted on the other of the pair of the output shafts; and the normally-engaged driving gear is mounted on the other side of the second shaft, the idle gear is mounted on the idle gear shaft, the normally-engaged driving gear is engaged with the second output driven gear and the idler gear separately, and the idle gear is engaged with the first output driven gear.

The technical solution of the present invention has the beneficial effects as follows: by designing an integrated dual-gear box structure, a user conveniently adjust gears as required actually, thereby expanding an application range of the double-roller dual-gear transmission box, and an entire box is compact in structure and occupies less assembly space.

In some embodiments, the input dual-gear box assembly is provided with a plurality of elongated holes, and the output box assembly is provided with a plurality of positioning bolts adapted to the plurality of elongated holes, the plurality of positioning bolts are mounted in the plurality of elongated holes in a one-to-one corresponding manner.

The further technical solution described above has the beneficial effects as follows: a position of the input shaft is adjustable to satisfy mounting requirements of different machine types, so as to match different harvester types, and thus the problem that it is difficult to assemble a belt around a belt pulley is solved, and set assembly and adjustment are facilitated.

In some embodiments, the double-roller dual-gear transmission box includes an input end adjustment rod for rotating the input dual-gear box assembly, the input end adjustment rod is disposed on an outer side wall of the input dual-gear box assembly, the plurality of elongated holes and the plurality of positioning bolts are positioned at a joint position between the input dual-gear box assembly and the output box assembly, and each of the plurality of elongated holes is cambered elongated hole.

The further technical solution described above has the beneficial effects as follows: the input dual-gear box assembly is connected with the output box assembly through a spigot, four elongated holes of a reference circle concentric with the spigot are designed adjacent to the spigot, and the input dual-gear box assembly is adjusted and rotated by adjusting the input end adjustment rod, so as to adjust the position of the input shaft. The position of the input shaft is adjustable to satisfy mounting requirements of different machine types, so as to match different harvester types, and thus the problem that it is difficult to assemble a belt around a belt pulley is solved, and set assembly and adjustment are facilitated.

In some embodiments, the input dual-gear box assembly includes a first housing and a connection disc, a first end of the connection disc is connected with the first housing; the output box assembly includes a roller box housing and a pair of roller box covers, wherein the pair of roller box covers are connected with the roller box housing, and a second end of the connection disc is connected with the roller box housing; and the input dual-gear box assembly is sleeved with a hydraulic pneumatic O-shaped rubber ring, the input dual-gear box assembly is connected with the output box assembly through the hydraulic pneumatic O-shaped rubber ring.

The further technical solution described above has the beneficial effects as follows: owing to the structural design of the housing, the double-roller dual-gear transmission box is convenient to mount and maintain and has higher stability and reliability.

In some embodiments, the input shaft is rotatably mounted in the input dual-gear box assembly through a first tapered roller bearing and a second tapered roller bearing, the first tapered roller bearing is positioned in a middle of the input shaft, and the second tapered roller bearing is positioned on one end of the input shaft; the middle of the input shaft is sleeved with a rubber covered rotary shaft lip seal ring and an input shaft bearing cover, the rubber covered rotary shaft lip seal ring is mounted in a middle of the input shaft bearing cover, and the input shaft bearing cover is connected with the input dual-gear box assembly through a first hexagonal flange bolt; and a first adjustment gasket is disposed between the input shaft bearing cover and the first tapered roller bearing, and the first adjustment gasket is sleeved on the input shaft.

The further technical solution described above has the beneficial effects as follows: owing to the structural design of a rotation position, the shaft is stable in rotation without a shake, external dust is prevented from entering the transmission box, and the double-roller dual-gear transmission box has higher stability and reliability.

In some embodiments, the double-roller dual-gear transmission box includes a first gear-second gear spacer sleeve, the first gear-second gear spacer sleeve is sleeved on the input shaft, the first gear-second gear spacer sleeve is positioned between the first-gear driving gear and the second-gear driving gear; and an oil baffle disc is arranged in the output box assembly, the oil baffle disc being adjacent to the second output driven gear and the first output driven gear.

The further technical solution described above has the beneficial effects as follows: the gear is prevented from shaking, and oil is prevented from splashing.

In some embodiments, each of the pair of the output shaft is rotatably mounted in the output box assembly through a pair of third tapered roller bearings, the pair of third tapered roller bearings is positioned on one end of a corresponding output shaft of the pair of output shafts and a middle of the corresponding output shaft of the pair of output shafts in a one-to-one corresponding manner; and a middle of each of the pair of output shaft is sleeved with an oil seal seat and a second adjustment gasket, the oil seal seat is connected with the output box assembly through a second hexagonal flange bolt, and the second adjustment gasket is positioned between the oil seal seat and a third tapered roller bearing of the pair of third tapered roller bearings positioned in the middle of the corresponding output shaft.

The further technical solution described above has the beneficial effects as follows: owing to the structural design of a rotation position, the shaft is stable in rotation without a shake, external dust is prevented from entering the transmission box, and the double-roller dual-gear transmission box has higher stability and reliability.

In some embodiments, the double-roller dual-gear transmission box includes a spacer sleeve, a second-gear gear baffle, a radial needle roller and cage assembly, and a needle roller spacer sleeve, the spacer sleeve, the second-gear gear baffle, the radial needle roller and the cage assembly and a needle roller spacer sleeve are sleeved on a middle of the second shaft, the spacer sleeve is positioned between the second-gear driven gear and the normally-engaged driving gear, and the second-gear gear baffle is positioned between the spacer sleeve and the second-gear driven gear; the first-gear driven gear and the second-gear driven gear are mounted on the second shaft through the radial needle roller and cage assembly; the needle roller spacer sleeve is abutted against the radial needle roller and cage assembly; the double-roller dual-gear transmission box includes a third tapered roller bearing and a fourth tapered roller bearing, the third tapered roller bearing and the fourth tapered roller bearing are sleeved on two ends of the second shaft respectively, one end of the second shaft is rotatably mounted in the output box assembly through the third tapered roller bearing, and the other end of the second shaft is rotatably mounted in the input dual-gear box assembly through the fourth tapered roller bearing; the double-roller dual-gear transmission box includes a bearing gland provided on the output box assembly and a bearing cover provided on the input dual-gear box assembly, the bearing gland is abutted against the third tapered roller bearing through a third adjustment gasket; and the bearing cover is abutted against the fourth tapered roller bearing through a third hexagonal flange bolt.

The further technical solution described above has the beneficial effects as follows: engagement and disengagement of the engagement sleeve and the gear are facilitated, and the transmission box has higher stability and reliability. Owing to the structural design of a rotation position, the shaft is stable in rotation without a shake, external dust is prevented from entering the transmission box, and the double-roller dual-gear transmission box has higher stability and reliability.

In some embodiments, the shift fork is mounted on the shift fork shaft through an elastic cylindrical pin; the double-roller dual-gear transmission box including an outer hexagonal screw plug, a shift fork shaft positioning spring, and a steel ball, the outer hexagonal screw plug, the shift fork shaft positioning spring and the steel ball are provided in the input dual-gear box assembly, the steel ball is slidably mounted in the input dual-gear box assembly, and two ends of the shift fork shaft positioning spring are connected with the outer hexagonal screw plug and the steel ball in a one-to-one corresponding manner; the shift fork shaft is provided with a plurality of grooves adapted to the steel ball, the steel ball is abutted against one of the plurality of grooves; and the shift fork shaft is sleeved with a shift fork shaft oil seal, the shift fork shaft oil seal is connected with the input dual-gear box assembly.

The further technical solution described above has the beneficial effects as follows: fixing of a position of the shift fork shaft is facilitated, engagement and disengagement of the engagement sleeve and the gear are facilitated, and the transmission box has higher stability and reliability.

In addition, some embodiments of the present invention further provide a double-longitudinal axial flow harvester. The double-longitudinal axial flow harvester includes any one of the double-roller dual-gear transmission boxes described above.

The technical solution of the present invention has the beneficial effects as follows: by designing an integrated dual-gear box structure, a user conveniently adjust gears as required actually, thereby expanding an application range of the double-roller dual-gear transmission box, and an entire box is compact in structure and occupies less assembly space.

Some advantages of additional aspects of the present invention will be set forth in the following description, and other advantages will be obvious from the following description, or learned by practice of the present invention.

### Brief Description of the Drawings

The accompanying drawings of the description serving as a part of the present invention are used to provide further understanding of the present invention. The illustrative examples of the present invention and their explanation are used to explain the present invention, and do not limit the present invention unduly. In the accompanying drawings:
Fig. 1 illustrates a first schematic structural diagram of a double-roller dual-gear transmission box according to some embodiments of the present invention;
Fig. 2 illustrates a second schematic structural diagram of a double-roller dual-gear transmission box according to some embodiments of the present invention; and
Fig. 3 illustrates a third schematic structural diagram of a double-roller dual-gear transmission box according to some embodiments of the present invention.

The accompanying drawings include reference numerals as follows: 1. input shaft; 2. rubber covered rotary shaft lip seal ring; 3. input shaft bearing cover; 4. first hexagonal flange bolt; 5. first adjustment gasket; 6. first tapered roller bearing; 7. first-gear driving gear; 8. first gear-second gear spacer sleeve; 9. first housing; 10. second-gear driving gear; 11. second tapered roller bearing; 12. connection disc; 13. roller box housing; 14. third tapered roller bearing; 15. second output driven gear; 16. roller box cover; 17. oil seal seat; 18. second hexagonal flange bolt; 19. second adjustment gasket; 20. hydraulic pneumatic O-shaped rubber ring; 21. spacer sleeve; 22. third tapered roller bearing; 23. bearing gland; 24. third adjustment gasket; 25. normally-engaged driving gear; 26. idle gear; 27. idle gear shaft; 28. first output driven gear; 29. output shaft; 30. elastic cylindrical pin; 32. shift fork; 33. shift fork shaft; 34. outer hexagonal screw plug; 35. shift fork shaft positioning spring; 36. steel ball; 37. shift fork shaft oil seal; 38. first-gear driven gear; 39. second-gear gear baffle; 40. radial needle roller and cage assembly; 41. fourth tapered roller bearing; 42. bearing cover; 43. needle roller spacer sleeve; 44. engagement sleeve; 45. second-gear driven gear; 48. third hexagonal flange bolt; 53. second shaft; 54. oil baffle disc; 61. input dual-gear box assembly; 62. output box assembly; 63. input end adjustment rod; 64. positioning bolt; and 65. elongated hole.

### Detailed Description of the Embodiments

The principles and features of the present invention are described below with reference to the accompanying drawings, which are provided by way of example only to illustrate the present invention and are not intended to limit the scope of the present invention.

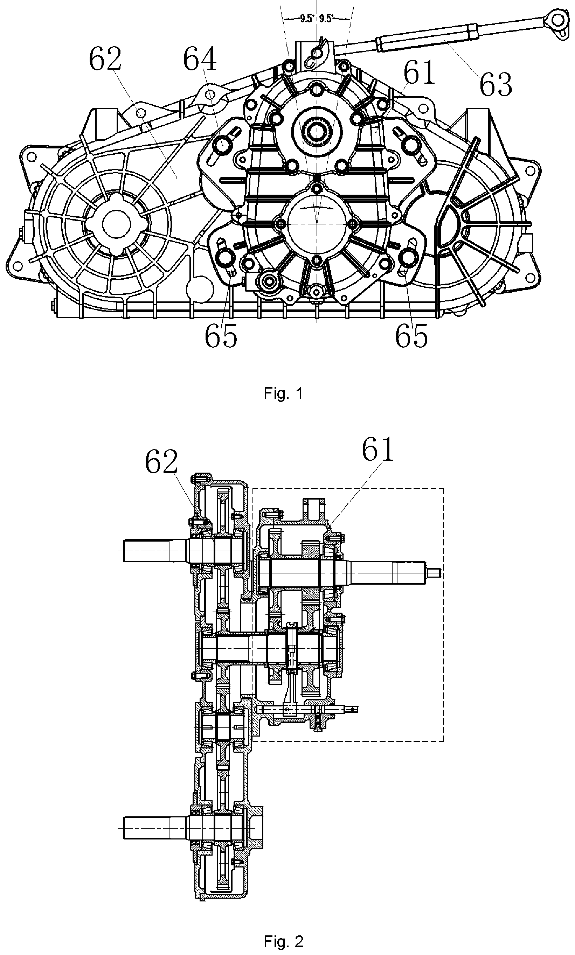

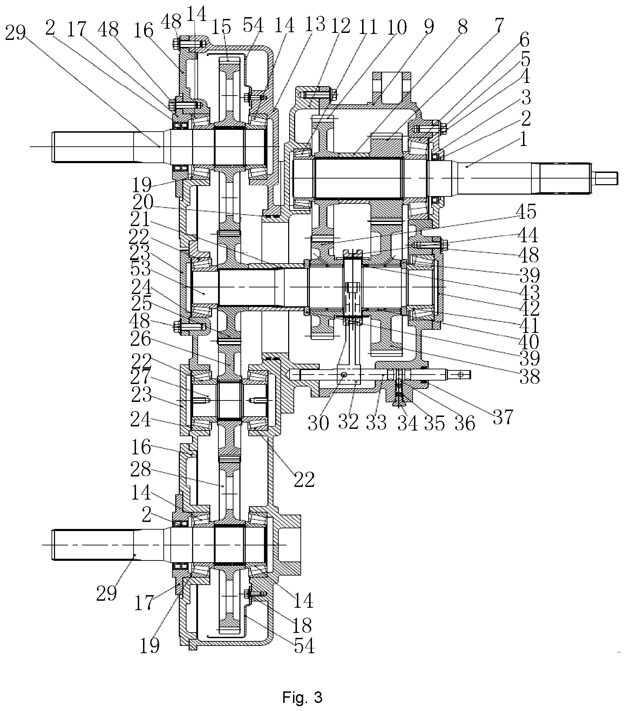

As shown in Figs. 1-3, some embodiments of the present invention provide a double-roller dual-gear transmission box. The double-roller dual-gear transmission box includes an input shaft 1, a first-gear driving gear 7, a second-gear driving gear 10, a second output driven gear 15, a normally-engaged driving gear 25, an idle gear 26, an idle gear shaft 27, a first output driven gear 28, a pair of output shafts 29, a shift fork 32, a shift fork shaft 33, a first-gear driven gear 38, an engagement sleeve 44, a second-gear driven gear 45, a second shaft 53, an input dual-gear box assembly 61, and an output box assembly 62, where the input shaft 1 is rotatably mounted in the input dual-gear box assembly 61, the first-gear driving gear 7 and the second-gear driving gear 10 are mounted on the input shaft 1, and the shift fork shaft 33 is slidably mounted in the input dual-gear box assembly 61; the shift fork 32 is mounted on the shift fork shaft 33, and the shift fork 32 is connected with the engagement sleeve 44; a first end of the second shaft 53 is rotatably mounted in the input dual-gear box assembly 61, and a second end of the second shaft 53 is rotatably mounted in the output box assembly 62); the engagement sleeve 44, the first-gear driven gear 38, and the second-gear driven gear 45 are mounted on one side of the second shaft 53; the engagement sleeve 44 is positioned between the first-gear driven gear 38 and the second-gear driven gear 45; the first-gear driven gear 38 is engaged with the first-gear driving gear 7, and the second-gear driven gear 45 is engaged with the second-gear driving gear 10; the pair of output shafts 29 and the idle gear shaft 27 are rotatably mounted in the output box assembly 62; the second output driven gear 15 is mounted on one of the pair of the output shafts 29, and the first output driven gear 28 is mounted on the other of the pair of the output shafts 29; and the normally-engaged driving gear 25 is mounted on the other side of the second shaft 53, the idle gear 26 is mounted on the idle gear shaft 27, the normally-engaged driving gear 25 engages with the second output driven gear 15 and the idler gear 26 separately, and the idle gear 26 engages with the first output driven gear 28.

The technical solution of the disclosure has the beneficial effects as follows: by designing an integrated dual-gear box structure, a user may conveniently adjust gears as required actually, thereby expanding an application range of the double-roller dual-gear transmission box, and an entire box is compact in structure and occupies less assembly space.

As shown in Figs. 1-3, further, the input dual-gear box assembly 61 is provided with a plurality of elongated holes 65, and the output box assembly 62 is provided with a plurality of positioning bolts 64 adapted to the elongated holes 65, the plurality of positioning bolts 64 being mounted in the plurality of elongated holes 65 in a one-to-one corresponding manner.

The further technical solution described above has the beneficial effects as follows: a position of the input shaft is adjustable to satisfy mounting requirements of different machine types, so as to match different harvester types, and thus the problem that it is difficult to assemble a belt around a belt pulley is solved, and set assembly and adjustment are facilitated.

Each positioning bolt 64 slides back and forth in the elongated hole 65 by 9.5 degrees. That is, the input dual-gear box assembly 61 may rotate back and forth relative to the output box assembly 62 by 9.5 degrees.

A structure inside a dotted box in Fig. 2 is a structure of the input dual-gear box assembly.

As shown in Figs. 1-3, further, an outer side wall of the input dual-gear box assembly 61 is provided with an input end adjustment rod 63 for rotating the input dual-gear box assembly 61, the plurality of elongated holes 65 and the plurality of positioning bolts 64 are positioned at a joint position between the input dual-gear box assembly 61 and the output box assembly 62, and each of the plurality of elongated holes 65 is cambered elongated hole.

The further technical solution described above has the beneficial effects as follows: the input dual-gear box assembly is connected with the output box assembly through a spigot, four elongated holes of a reference circle concentric with the spigot are designed adjacent to the spigot, and the input dual-gear box assembly is adjusted and rotated by adjusting the input end adjustment rod, so as to adjust the position of the input shaft. The position of the input shaft is adjustable to satisfy mounting requirements of different machine types, so as to match different harvester types, and thus the problem that it is difficult to assemble a belt around a belt pulley is solved, and set assembly and adjustment are facilitated.

As shown in Figs. 1-3, in some embodiments the input dual-gear box assembly 61 includes a first housing 9 and a connection disc 12, a first end of the connection disc 12 is connected with the first housing 9; the output box assembly 62 includes a roller box housing 13 and a pair of roller box covers 16, the pair of roller box covers 16 are connected with the roller box housing 13, and a second end of the connection disc 12 is connected with the roller box housing 13; and the input dual-gear box assembly 61 is sleeved with a hydraulic pneumatic O-shaped rubber ring 20, the input dual-gear box assembly 61 is connected with the output box assembly 62 through the hydraulic pneumatic O-shaped rubber ring 20.

The further technical solution described above has the beneficial effects as follows: owing to the structural design of the housing, the double-roller dual-gear transmission box is convenient to mount and maintain and has higher stability and reliability.

As shown in Figs. 1-3, in some embodiments, the input shaft 1 is rotatably mounted in the input dual-gear box assembly 61 through a first tapered roller bearing 6 and a second tapered roller bearing 11, the first tapered roller bearing 6 is positioned in a middle of the input shaft 1, and the second tapered roller bearing 11 is positioned on one end of the input shaft 1; the middle of the input shaft 1 is sleeved with a rubber covered rotary shaft lip seal ring 2 and an input shaft bearing cover 3, the rubber covered rotary shaft lip seal ring 2 is mounted in s middle of the input shaft bearing cover 3, and the input shaft bearing cover 3 is connected with the input dual-gear box assembly 61 through a first hexagonal flange bolt 4; and a first adjustment gasket 5 is disposed between the input shaft bearing cover 3 and the first tapered roller bearing 6, and the first adjustment gasket 5 is sleeved on the input shaft 1.

The further technical solution described above has the beneficial effects as follows: owing to the structural design of a rotation position, the shaft is stable in rotation without a shake, external dust is prevented from entering the transmission box, and the double-roller dual-gear transmission box has higher stability and reliability.

As shown in Figs. 1-3, in some embodiments, the double-roller dual-gear transmission box includes a first gear-second gear spacer sleeve 8, the first gear-second gear spacer sleeve 8 is sleeved on the input shaft 1, the first gear-second gear spacer sleeve 8 is positioned between the first-gear driving gear 7 and the second-gear driving gear 10; and an oil baffle disc 54 is arranged in the output box assembly 62, the oil baffle disc 54 being adjacent to the second output driven gear 15 and the first output driven gear 28.

The further technical solution described above has the beneficial effects as follows: the gear is prevented from shaking, and oil is prevented from splashing.

As shown in Figs. 1-3, in some embodiments, each of the pair of the output shaft 29 is rotatably mounted in the output box assembly 62 through a pair of third tapered roller bearings 14, the pair of third tapered roller bearings 14 is positioned on one end of a corresponding output shaft 29 and a middle of the corresponding output shaft 29 of the pair of output shafts 29 in a one-to-one corresponding manner; and a middle of each of the pair of output shaft 29 is sleeved with an oil seal seat 17 and a second adjustment gasket 19, the oil seal seat 17 is connected with the output box assembly 62 through a second hexagonal flange bolt 18, and the second adjustment gasket 19 is positioned between the oil seal seat 17 and a third tapered roller bearing 14 of the pair of third tapered roller bearings 14 positioned in the middle of the corresponding output shaft 29.

The further technical solution described above has the beneficial effects as follows: owing to the structural design of a rotation position, the shaft is stable in rotation without a shake, external dust is prevented from entering the transmission box, and the double-roller dual-gear transmission box has higher stability and reliability.

As shown in Figs. 1-3, in some embodiments, the double-roller dual-gear transmission box includes a spacer sleeve 21, a second-gear gear baffle 39, a radial needle roller and cage assembly 40, and a needle roller spacer sleeve 43, the spacer sleeve 21, the second-gear gear baffle 39, the radial needle roller and the cage assembly 40, and a needle roller spacer sleeve 43 are sleeved on a middle of the second shaft 53, the spacer sleeve 21 is positioned between the second-gear driven gear 45 and the normally-engaged driving gear 25, and the second-gear gear baffle 39 is positioned between the spacer sleeve 21 and the second-gear driven gear 45; the first-gear driven gear 38 and the second-gear driven gear 45 are mounted on the second shaft 53 through the radial needle roller and cage assembly 40; the needle roller spacer sleeve 43 is abutted against the radial needle roller and cage assembly 40; the double-roller dual-gear transmission box includes a third tapered roller bearing 22 and a fourth tapered roller bearing 41,the third tapered roller bearing 22 and the fourth tapered roller bearing 41 are sleeved on two ends of the second shaft respectively, one end of the second shaft 53 is rotatably mounted in the output box assembly 62 through the third tapered roller bearing 22, and the second shaft 53 is rotatably mounted in the input dual-gear box assembly 61 through the fourth tapered roller bearing 41; the double-roller dual-gear transmission box includes a bearing gland 23 provided on the output box assembly 62 and a bearing cover 42 provided on the input dual-gear box assembly 61, the bearing gland 23 is abutted against the third tapered roller bearing 22 through a third adjustment gasket 24; and the bearing cover 42 is abutted against the fourth tapered roller bearing 41 through a third hexagonal flange bolt 48.

The further technical solution described above has the beneficial effects as follows: engagement and disengagement of the engagement sleeve and the gear are facilitated, and the transmission box has higher stability and reliability. Owing to the structural design of a rotation position, the shaft is stable in rotation without a shake, external dust is prevented from entering the transmission box, and the double-roller dual-gear transmission box has higher stability and reliability.

As shown in Figs. 1-3, in some embodiments, the shift fork 32 is mounted on the shift fork shaft 33 through an elastic cylindrical pin 30; the double-roller dual-gear transmission box including an outer hexagonal screw plug 34, a shift fork shaft positioning spring 35 and a steel ball 36, the outer hexagonal screw plug 34, the shift fork shaft positioning spring 35 and the steel ball 36 are provided in the input dual-gear box assembly 61, the steel ball 36 is slidably mounted in the input dual-gear box assembly 61, and two ends of the shift fork shaft positioning spring 35 are connected with the outer hexagonal screw plug 34 and the steel ball 36 in a one-to-one corresponding manner; the shift fork shaft 33 is provided with a plurality of grooves adapted to the steel ball 36, the steel ball 36 is abutted against one of the plurality of grooves; and the shift fork shaft 33 is sleeved with a shift fork shaft oil seal 37, the shift fork shaft oil seal 37 is connected with the input dual-gear box assembly 61.

The further technical solution described above has the beneficial effects as follows: fixing of a position of the shift fork shaft is facilitated, engagement and disengagement of the engagement sleeve and the gear are facilitated, and the transmission box has higher stability and reliability.

The double-roller dual-gear transmission box of the present invention is of the integrated dual-gear box structure. Moreover, a mechanism with an adjustable input end is designed, so that the mounting requirements of different machine types is satisfied, or the problem that it is difficult to assemble a belt around a belt pulley is solved. Thus, the double-roller dual-gear transmission box features simple operation, high reliability, and compact structure. In some embodiments, the double-roller dual-gear transmission box is a dual-gear roller transmission box for a double-longitudinal axial flow harvester. Moreover, different vehicle types is matched by adjusting the position of the input shaft of the roller transmission box, or the problem that it is difficult to assemble a belt when a belt pulley is assembled on an input end of the roller box is solved.

The double-roller dual-gear transmission box is a double-roller dual-gear transmission box which is used for a wheel type harvesting machine, and has one input end, two output ends, and an adjustable input position.

A specific embodiment of speed change of the double-roller dual-gear transmission box is as follows:
A first gear: the shift fork shaft 33 drives the shift fork 32 to move, thereby pushing the engagement sleeve 44 to engage with the first-gear driven gear 38, so as to drive the second shaft 53 and the normally-engaged driving gear 25 to rotate; and moreover, the second output driven gear 15 and the first output driven gear 28 drive the two output shafts 29 to rotate, thereby engaging with the first gear.

A first-gear power transmission route: power is transmitted to the second output driven gear and one of the two output shafts from the input shaft, the first-gear driving gear, the first-gear driven gear, the second shaft, and the normally-engaged driving gear, and then transmitted to the idle gear, the first output driven gear, and the other of the two output shafts from the normally-engaged driving gear.

A second gear: the shift fork shaft 33 drives the shift fork 32 to move, thereby pushing the engagement sleeve 44 to engage with the second-gear driven gear 45, so as to drive the second shaft 53 and the normally-engaged driving gear 25 to rotate; and moreover, the second output driven gear 15 and the first output driven gear 28 drive the two output shafts 29 to rotate, thereby engaging with the second gear.

A second-gear power transmission route: power is transmitted to the second output driven gear and one of the output shafts from the input shaft, the second-gear driving gear, the second-gear driven gear, the second shaft, and the normally-engaged driving gear, and then transmitted to the idle gear, the first output driven gear, and the other of the two output shafts from the engagement driving gear.

An input position adjustable structure: the input dual-gear box assembly 61 is connected with the output box assembly 62 through the spigot, the four elongated holes of the reference circle concentric with the spigot are designed adjacent to the spigot, and the input dual-gear box assembly is adjusted to rotate by adjusting the input end adjustment rod 63, so as to adjust the position of the input shaft.

It is the first time to employ the integrated double-roller dual-gear transmission box (the double-roller dual-gear transmission box) on the double-longitudinal axial flow harvester. The entire box is compact in structure. Moreover, the structure with the adjustable input shaft position is employed, so that the set assembly and adjustment are facilitated.

In an alternative solution, a transmission route and a structure remain unchanged, and only gear parameters are changed to form a novel integrated double-roller dual-gear transmission box with an adjustable input position.

The roller transmission box employs the adjustable input shaft position for the first time, so as to match different harvester types, and the integrated double-roller dual-gear transmission box (the double-roller dual-gear transmission box) is used on the double-longitudinal axial flow harvester.

In addition, some embodiments of the present invention further provide a double-longitudinal axial flow harvester. The double-longitudinal axial flow harvester includes any one of the double-roller dual-gear transmission boxes described above.

The technical solution of the present invention has the beneficial effects as follows: by designing an integrated dual-gear box structure, a user conveniently adjust gears as required actually, thereby expanding an application range of the double-roller dual-gear transmission box, and an entire box is compact in structure and occupies less assembly space.

In the end, it should be noted that all the above examples are only used to illustrate the technical solutions of the present invention, but not to limit same. While the present invention has been described in detail with reference to all the foregoing examples, it should be understood by those of ordinary skill in the art that they can still modify the technical solutions described in all the foregoing examples, or make equivalent substitutions to the technical features of the technical solutions in all or in part. However, these modifications or substitutions do not make the essence of the corresponding technical solutions depart from the scope of the technical solutions of all the examples of the present invention.

## Claims

1. A double-roller dual-gear transmission box, **characterized by**, comprising an input shaft (1), a first-gear driving gear (7), a second-gear driving gear (10), a second output driven gear (15), a normally-engaged driving gear (25), an idle gear (26), an idle gear shaft (27), a first output driven gear (28), a pair of output shafts (29), a shift fork (32), a shift fork shaft (33), a first-gear driven gear (38), an engagement sleeve (44), a second-gear driven gear (45), a second shaft (53), an input dual-gear box assembly (61), and an output box assembly (62), wherein the input shaft (1) is rotatably mounted in the input dual-gear box assembly (61), the first-gear driving gear (7) and the second-gear driving gear (10) are mounted on the input shaft (1), and the shift fork shaft (33) is slidably mounted in the input dual-gear box assembly (61); the shift fork (32) is mounted on the shift fork shaft (33), and the shift fork (32) is connected with the engagement sleeve (44); a first end of the second shaft (53) is rotatably mounted in the input dual-gear box assembly (61), and a second end of the second shaft (53) is rotatably mounted in the output box assembly (62); the engagement sleeve (44), the first-gear driven gear (38), and the second-gear driven gear (45) are mounted on one side of the second shaft (53); the engagement sleeve (44) is positioned between the first-gear driven gear (38) and the second-gear driven gear (45); the first-gear driven gear (38) is engaged with the first-gear driving gear (7), and the second-gear driven gear (45) is engaged with the second-gear driving gear (10); the pair of output shafts (29) and the idle gear shaft (27) are rotatably mounted in the output box assembly (62); the second output driven gear (15) is mounted on one of the pair of the output shafts (29), and the first output driven gear (28) is mounted on the other of the pair of the output shafts (29); and the normally-engaged driving gear (25) is mounted on the other side of the second shaft (53), the idle gear (26) is mounted on the idle gear shaft (27), the normally-engaged driving gear (25) is engaged with the second output driven gear (15) and the idler gear (26) separately, and the idle gear (26) is engaged with the first output driven gear (28).

2. The double-roller dual-gear transmission box as claimed in claim 1, wherein the input dual-gear box assembly (61) is provided with a plurality of elongated holes, and the output box assembly (62) is provided with a plurality of positioning bolts (64) adapted to the plurality of elongated holes, the plurality of positioning bolts (64) are mounted in the plurality of elongated holes in a one-to-one corresponding manner.

3. The double-roller dual-gear transmission box as claimed in claim 2, wherein the double-roller dual-gear transmission box comprises an input end adjustment rod (63) for rotating the input dual-gear box assembly (61), the input end adjustment rod (63) is disposed on an outer side wall of the input dual-gear box assembly (61), the plurality of elongated holes and the plurality of positioning bolts (64) are positioned at a joint position between the input dual-gear box assembly (61) and the output box assembly (62), and each of the plurality of elongated holes is cambered elongated hole.

4. The double-roller dual-gear transmission box as claimed in claim 1, wherein the input dual-gear box assembly (61) comprises a first housing (9) and a connection disc (12), a first end of the connection disc (12) is connected with the first housing (9); the output box assembly (62) comprises a roller box housing (13) and a pair of roller box covers (16), wherein the pair of roller box covers (16) are connected with the roller box housing (13), and a second end of the connection disc (12) is connected with the roller box housing (13); and the input dual-gear box assembly (61) is sleeved with a hydraulic pneumatic O-shaped rubber ring (20), the input dual-gear box assembly (61) is connected with the output box assembly (62) through the hydraulic pneumatic O-shaped rubber ring (20).

5. The double-roller dual-gear transmission box as claimed in claim 1, wherein the input shaft (1) is rotatably mounted in the input dual-gear box assembly (61) through a first tapered roller bearing (6) and a second tapered roller bearing (11), the first tapered roller bearing (6) is positioned in a middle of the input shaft (1), and the second tapered roller bearing (11) is positioned on one end of the input shaft (1); the middle of the input shaft (1) is sleeved with a rubber covered rotary shaft lip seal ring (2) and an input shaft bearing cover (3), the rubber covered rotary shaft lip seal ring (2) is mounted in a middle of the input shaft bearing cover (3), and the input shaft bearing cover (3) is connected with the input dual-gear box assembly (61) through a first hexagonal flange bolt (4); and a first adjustment gasket (5) is disposed between the input shaft bearing cover (3) and the first tapered roller bearing (6), and the first adjustment gasket (5) is sleeved on the input shaft (1).

6. The double-roller dual-gear transmission box as claimed in claim 1, wherein the double-roller dual-gear transmission box comprises a first gear-second gear spacer sleeve (8), the first gear-second gear spacer sleeve (8) is sleeved on the input shaft (1), the first gear-second gear spacer sleeve (8) is positioned between the first-gear driving gear (7) and the second-gear driving gear (10); and an oil baffle disc (54) is arranged in the output box assembly (62), the oil baffle disc (54) being adjacent to the second output driven gear (15) and the first output driven gear (28).

7. The double-roller dual-gear transmission box as claimed in claim 1, wherein each of the pair of the output shaft (29) is rotatably mounted in the output box assembly (62) through a pair of third tapered roller bearings (14), the pair of third tapered roller bearings (14) is positioned on one end of a corresponding output shaft (29) of the pair of output shafts (29) and a middle of the corresponding output shaft (29) of the pair of output shafts (29) in a one-to-one corresponding manner; and a middle of each of the pair of output shaft (29) is sleeved with an oil seal seat (17) and a second adjustment gasket (19), the oil seal seat (17) is connected with the output box assembly (62) through a second hexagonal flange bolt (18), and the second adjustment gasket (19) is positioned between the oil seal seat (17) and a third tapered roller bearing (14) of the pair of third tapered roller bearings (14) positioned in the middle of the corresponding output shaft (29).

8. The double-roller dual-gear transmission box as claimed in claim 1, wherein the double-roller dual-gear transmission box comprises a spacer sleeve (21), a second-gear gear baffle (39), a radial needle roller and cage assembly (40), and a needle roller spacer sleeve (43), the spacer sleeve (21), the second-gear gear baffle (39), the radial needle roller and the cage assembly (40), and a needle roller spacer sleeve (43) are sleeved on a middle of the second shaft (53), the spacer sleeve (21) is positioned between the second-gear driven gear (45) and the normally-engaged driving gear (25), and the second-gear gear baffle (39) is positioned between the spacer sleeve (21) and the second-gear driven gear (45); the first-gear driven gear (38) and the second-gear driven gear (45) are mounted on the second shaft (53) through the radial needle roller and cage assembly (40); the needle roller spacer sleeve (43) is abutted against the radial needle roller and cage assembly (40); the double-roller dual-gear transmission box comprises a third tapered roller bearing (22) and a fourth tapered roller bearing (41), the third tapered roller bearing (22) and the fourth tapered roller bearing (41) are sleeved on two ends of the second shaft (53) respectively, one end of the second shaft (53) is rotatably mounted in the output box assembly (62) through the third tapered roller bearing (22), and the other end of the second shaft (53) is rotatably mounted in the input dual-gear box assembly (61) through the fourth tapered roller bearing (41); the double-roller dual-gear transmission box comprises a bearing gland (23) provided on the output box assembly (62) and a bearing cover (42) provided on the input dual-gear box assembly (61), the bearing gland (23) is abutted against the third tapered roller bearing (22) through a third adjustment gasket (24); and the bearing cover (42) is abutted against the fourth tapered roller bearing (41) through a third hexagonal flange bolt (48).

9. The double-roller dual-gear transmission box as claimed in claim 1, wherein the shift fork (32) is mounted on the shift fork shaft (33) through an elastic cylindrical pin (30); the double-roller dual-gear transmission box comprising an outer hexagonal screw plug (34), a shift fork shaft positioning spring (35), and a steel ball (36), the outer hexagonal screw plug (34), the shift fork shaft positioning spring (35) and the steel ball (36) are provided in the input dual-gear box assembly (61), the steel ball (36) is slidably mounted in the input dual-gear box assembly (61), and two ends of the shift fork shaft positioning spring (35) are connected with the outer hexagonal screw plug (34) and the steel ball (36) in a one-to-one corresponding manner; the shift fork shaft (33) is provided with a plurality of grooves adapted to the steel ball (36), the steel ball (36) is abutted against one of the plurality of grooves; and the shift fork shaft (33) is sleeved with a shift fork shaft oil seal (37), the shift fork shaft oil seal (37) is connected with the input dual-gear box assembly (61).

10. A double-longitudinal axial flow harvester, comprising the double-roller dual-gear transmission box as claimed in any one of claims 1-9.
